# EUROPÄISCHE PATENTANMELDUNG

(11) **EP 1 916 486 A2**
(43) Veröffentlichungstag der Anmeldung: **30.04.2008**
(21) Anmeldenummer: 07019702.5
(22) Anmeldetag: 09.10.2007
(51) Int. Cl.: F24J 2/20, F24J 2/32, F24J 2/34, F24J 2/46

(54) **Solarkollektorsystem**

(30) Priorität: 18.10.2006 DE 202006016100 U
(71) Anmelder: Wagner & Co. Solartechnik GmbH, 35091 Cölbe (DE)
(72) Erfinder: Wagner, Andreas, 35091 Cölbe (DE)
(74) Vertreter: Buchhold, Jürgen

(57) **Zusammenfassung**

Solarkollektorsystem (10) mit einem Kollektor (12), der einen Rollbondabsorber (13) mit einer Absorberplatte (14) aufweist, in der Kanäle (15) für die Zirkulation eines Wärmetauscher-Strömungsmediums ausgebildet sind, sowie mit Vor- und Rücklaufanschlüssen (16; 18) am Kollektor (12) und einem zu ihm führenden Rücklauf. Um ein verbessertes Solarkollektorsystem zu schaffen, das in der Warmwasser- und Heizungstechnik korrosionssicher verwendbar sein soll, ist vorgesehen, dass in den Rollbondabsorber (13) ein Hauptrohr (19) eingearbeitet ist, dessen Querschnitt größer als derjenige der übrigen Kollektor-Rohrleitungen bzw. Kanäle (15) ist.

## Beschreibung

Die Erfindung betrifft ein Solarkollektorsystem gemäß dem Oberbegriff von Anspruch 1.

Zur Nutzung von Sonnenenergie wird die aus der Strahlung in einem Kollektor aufgenommene Wärmeenergie entweder direkt oder über Wärmeübertrager an einen Verbraucher herangeführt oder in einem Zwischenspeicher aufgefangen, so daß sie nach Bedarf innerhalb einer Anlage bzw. eines Gebäudes zur Verfügung steht. In Wärmetauschern läßt man ein Medium zirkulieren, z.B. Wasser, Sole, Isobutan u.dgl. Dieser Wärmeträger muß in einem geschlossenen System frei oder unter Pumpwirkung strömen können, wobei Dichtheit und Korrosionsfreiheit bei ganz unterschiedlichen Temperaturen und klimatischen Einflüssen dauerhaft gewährleistet sein müssen.

Solarheizungen haben typisch einen Sonnenkollektor, in den - vorzugsweise unten - kühle Flüssigkeit einströmt, während durch Sonnenstrahlung erwärmte und daher spezifisch leichtere Flüssigkeit aufsteigt, die unter Wärmeisolation einem Speichertank für Brauchwasser zugeführt wird. Der Kollektor kann ein Rohrregister aufweisen, aus dem der Wärmeträger unter Schwerkraft-Einwirkung in den Speicher gelangt. Solche Register werden aus dünnen Aluminium- und/oder Kupferblechen hergestellt, mit denen eine Anzahl von Kupferrohren größerer Durchmesser und von Absorberkanälen ohne Wärmeleitungs-Widerstände und dicht zu verbinden sind. Eine Misch-Installation von Kupfer- und Aluminium-Bauteilen bedingt erhöhte Kosten, vor allem wenn Laser- oder Ultraschallschweißung eingesetzt wird.

Sogenannte Rollbondabsorber, die generell aus Aluminiumblech bestehen, weisen Paare von profilierten Blechen auf, welche an sich berührenden Teilen miteinander zu einem Plattenkörper flächig verbunden sind. Die Geometrie der dazwischen definierten Kanalstruktur kann weitgehend frei konzipiert werden. Nachteilig sind jedoch hohe Anforderungen an Korrosionsschutz durch allgemein erst bauseitig auszuführende Maßnahmen, deren gesicherte Einhaltung schwer zu kontrollieren ist.

Es ist ein wichtiges Ziel der Erfindung, unter Überwindung der Nachteile des Standes der Technik ein verbessertes Solarkollektorsystem zu schaffen, das in der Warmwasser- und Heizungstechnik korrosionssicher verwendbar sein soll. Die Erfindung bezweckt insbesondere, mit verringertem Aufwand ein System herstell- und montierbar zu machen, dessen Komponenten und Gestaltung derart wählbar sind, daß sich unterschiedlichen Bedürfnissen leicht Rechnung tragen läßt.

Hauptmerkmale der Erfindung sind in Anspruch 1 sowie in Anspruch 10 angegeben. Ausgestaltungen sind Gegenstand der Ansprüche 2 bis 9 und 11 bis 23.

Bei einem Solarkollektorsystem mit einem Kollektor, der einen Rollbondabsorber mit einer Absorberplatte aufweist, in der Kanäle für die Zirkulation eines Wärmetauscher-Strömungsmediums ausgebildet sind, sowie mit Vor- und Rücklaufanschlüssen am Kollektor und einem zu ihm führenden Rücklauf, sieht die Erfindung laut Anspruch 1 vor, daß in den Rollbondabsorber ein Hauptrohr eingearbeitet ist, dessen Querschnitt größer als derjenige der übrigen Kollektor-Rohrleitungen bzw. Kanäle ist. Dies ist vor allem für mit einem Speicher verbundene Solaranlagen von großem Vorteil, bei denen im Kollektor erwärmte Solarflüssigkeit unter Schwerkraftzirkulation strömt. Für den Flüssigkeitseintritt ist herkömmlich regelmäßig ein unterer Anschluß vorhanden, von dem ein meist frei verlegtes und relativ langes Rücklaufrohr ausgeht, das nicht nur störend sichtbar ist, sondern auch besonders isoliert werden muß. Das entfällt erfindungsgemäß, weil das vergrößerten Querschnitt aufweisende Hauptrohr direkt in den Rollbondabsorber integriert ist. Das Hauptrohr kann als Rücklaufrohr dienen; es ist mit dem Speicher durch eine relativ kurze, z.B. abgedeckt verlegte Leitung verbindbar. Fertigung und Installation sind stark vereinfacht, da der Rollbondabsorber sowohl Sammler- als auch Verteilerkanäle von wählbarer Geometrie enthält.

Das integrierte Hauptrohr ist vorteilhaft an der Absorberplatte wärmeleitend angebracht, z.B. mit ihr einstückig oder stoffschlüssig verbunden. Durch einen geschlossenen Kreislauf ohne Kupfermaterial vermeidet man das übliche externe Kupferrohr, das aus Korrosionsgründen in Kombination mit dem Aluminium-Absorber ungünstig wäre.

Die Vor- und Rücklaufanschlüsse zum Rollbondabsorber können auf gleicher Höhe und/oder nebeneinander angeordnet sein. Ein großer Vorteil ist das infolgedessen insgesamt geringe Volumen an Strömungsmedium, weshalb auch das Ausdehnungsvolumen bei Wärmeentwicklung klein ist und keine eigenen Ausdehnungsgefäße notwendig sind, da der obere luftgefüllte Bereich des Speichers genügt.

Bei einer sehr vorteilhaften Weiterbildung ist der Rollbondabsorber mit einer Anzahl parallelgeschalteter Kanäle im Quer- oder Hochformat ausgebildet, was auf einfache Weise eine Anpassung an unterschiedliche Verhältnisse vor Ort ermöglicht; durch Auswahl der Gestaltung sind die Montagebedingungen vorab optimierbar. Beispielsweise läßt sich der Rollbondabsorber waagrecht anordnen, so daß man mit geringerer Bauhöhe auskommt, wo eine - ohnehin auffälligere - Hochformat-Installation zu viel Raum in Anspruch nehmen würde.

Bei einer Gestaltung nach Anspruch 10, wofür selbständiger Schutz beansprucht wird, ist der Rollbondabsorber mit in sich geschlossenen Absorberkanälen, einem separaten Rohrkanal sowie einem Hauptrohr versehen, dessen Querschnitt größer als derjenige der übrigen Kollektor-Rohrleitungen bzw. Kanäle ist. Der separate Rohrkanal kann - innerhalb des Kollektors in einer Wärmeisolierung - an oder unter einer Absorberplatte wärmeleitend angebracht sein, z.B. unter einer Blechabwinkelung, so daß Trinkwasser direkt aufgeheizt werden kann. Das Rohrsystem arbeitet nach dem sog. Heatpipe-Prinzip, d.h. als Strömungsmedium dient eine kleine Fluidmenge, z.B. eine Alkoholfüllung, die durch Unterdruck im oberen Absorberteil schon bei niedriger Temperatur verdampft und Wärme an einen anderen Kreislauf abgibt. Auf diese Weise ist aus einem einfachen Wärmespeicher z.B. bei geneigtem Kollektor oder schrägem Rohrkanal nur durch Schwerkraftumwälzung direkt temperiertes Trinkwasser verfügbar.

Auch für sog. Drainback-Anlagen ist es zweckmäßig, die Vor- und Rücklaufleitungen bereits im Absorber unterzubringen. Vor allem für in ein Dach integrierte Kollektoren ordnet man die Vor- und Rücklaufanschlüsse am Absorber unten direkt nebeneinander an. Die dadurch ermöglichte gemeinsame Verlegung vereinfacht die Rohrdurchführung am Dach, nämlich mittels Rohr-Steckverbindungen nach innen zu den Absorber-Anschlüssen. Die erfindungsgemäß vorgesehene Kanalgeometrie solcher Rollbondabsorber ist konstruktiv einfach und entsprechend kostengünstig.

Vorteilhaft ist im Rollbondabsorber-Anschlußbereich eine Öffnung oder Hülse zum Einstecken eines Temperaturfühlers vorgesehen, der also dicht am Vorlauf sitzt. Dank optimaler thermischer Anbindung wird die Temperatur des Strömungsmediums sehr genau erfaßt, was z.B. bei Drainback-Anlagen wegen Abkühleffekten im Anlaufstadium wichtig ist. Vorteilhaft ist ferner, daß der Fühler selbst bei einer In-Dach-Montage, die allgemein mit ungünstiger Zugänglichkeit einhergeht, doch gut austauschbar ist. So kann man Fühlerdefekten abhelfen, die etwa durch gewitterbedingte Überspannungen entstehen können.

Gemäß einer Spezialisierung ist an der Absorberplatte neben Rohrstutzen wenigstens ein Einschnitt vorhanden, um ein Kanal- oder Rohrstück entlang einer Biegekante vorzugsweise nach unten abbiegen zu können, damit die Anschlüsse besser zugänglich sind. Möglich ist eine schräge Kanalführung, so daß man den Absorber mühelos ganz leerlaufen lassen kann, was zum Frostschutz von wasserbetriebenen Anlagen wichtig ist. Außerdem ist ein rückseitiger Rohranschluß leicht durchführbar.

Bereits vorhandene Warmwasserspeicher, z.B. auch Elektroboiler, können über eine Zirkulationsleitung mit einem Heatpipe-Kollektor verbunden werden, so daß sich die Anlagekosten deutlich verringern. Um ein Einfrieren zu verhindern, kann man also eine Zirkulationspumpe betreiben, ohne daß nennenswerte Wärmeverluste entstehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine schematische Draufsicht auf einen Rollbondabsorber im Hochformat,
- Fig. 2: eine schematische Draufsicht auf einen Rollbondabsorber im Querformat,
- Fig. 3: eine Draufsicht ähnlich Fig. 1, jedoch mit anderen Anschlüssen,
- Fig. 3a: eine Ausschnittvergrößerung entsprechend dem Bereich IIIa in Fig. 3,
- Fig. 3b: eine Seitenansicht zu Fig. 3a,
- Fig. 4: eine schematische Draufsicht auf einen Rollbondabsorber mit geschlossenem Kanalsystem,
- Fig. 4a: eine Seitenansicht zu Fig. 4.
- Fig. 5: eine schematische Draufsicht auf einen Rollbondabsorber ähnlich Fig. 4, jedoch mit einer Heatpipe,
- Fig. 5a: eine Seitenansicht zu Fig. 5,
- Fig. 5b: eine Querschnittsansicht eines Gehäuses mit einem Rollbondabsorber ähnlich Fig. 5a und
- Fig. 6: eine Schrägansicht einer Solaranlage mit mehreren Kollektoren und aufgesetztem Wärmetauscher.

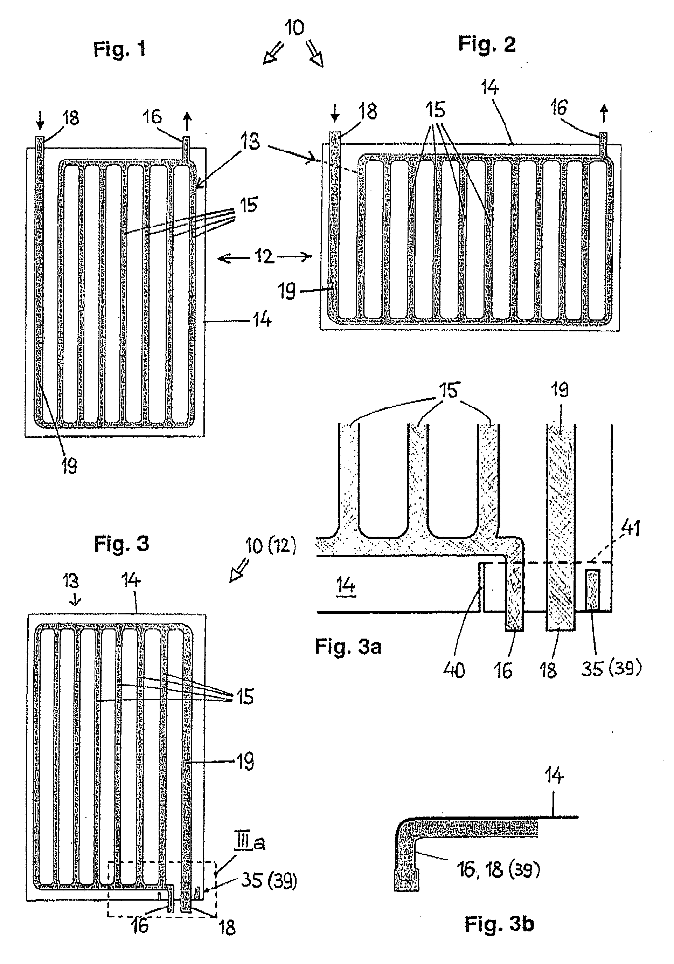

Im Ausführungsbeispiel von Fig. 1 ist ein Kollektorsystem 10 in schematisierter Draufsicht dargestellt, wobei umrahmende Elemente, eine Glasabdeckung, Befestigungselemente u.dgl. übersichtshalber weggelassen sind. Der Kollektor 12 hat an einem Rollbondabsorber 13, der einen Aluminiumblechkörper mit einer Absorberplatte 14 aufweist, ausgeformte Kanäle 15, welche an ihren oberen und unteren Enden quer strömungsverbunden, also paralleigeschattet sind. Sie sind beispielsweise linear gestaltet und können - müssen aber nicht - zueinander parallel verlaufen; auch verschachtelte und/oder mäanderförmige Anordnungen sind möglich.

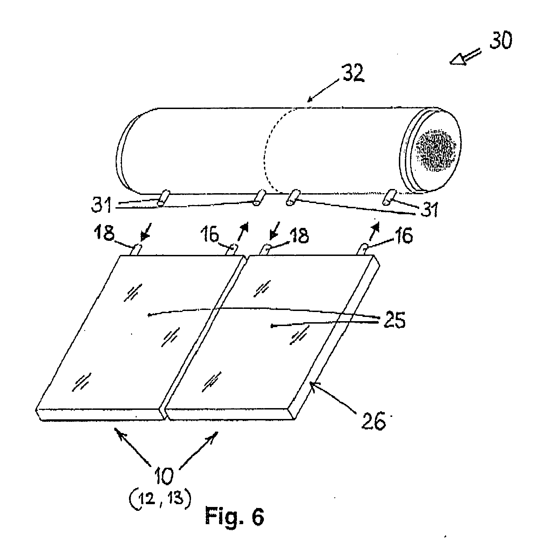

Der Kollektor 12 kann zur Installation im Hochformat (Fig. 1) oder im Querformat (Fig. 2) ausgelegt sein. Anschlüsse für Vorlauf 16 und Rücklauf 18 sind am Rollbondabsorber 13 auf gleicher Höhe und/oder nebeneinander angeordnet. Ein integriertes Hauptrohr 19 bildet eine insgesamt relativ kurze Verbindung zu einem Speicher (z.B. 30, Fig. 6). Damit werden - bei gleichzeitiger Kostensenkung - herkömmlich häufige Nachteile und Störungen wie nächtlich umgekehrte Zirkulation, Wärmeverluste, erhöhter lsolieraufwand u.dgl. auf sehr einfache Weise vermieden.

Während bei den Bauformen von Fig. 1 und 2 für Schwerkraftabsorber, d.h. Thermosifon-Solaranlagen, die Vor- und Rücklaufanschlüsse 16, 18 am Rollbondabsorber 13 jeweils beide oben und im Abstand zueinander sitzen, ist aus Fig. 3 ein vor allem für Drainback-Anlagen zweckmäßiges Ausführungsbeispiel ersichtlich, bei dem die Vorund Rücklaufanschlüsse 16, 18 unten unmittelbar nebeneinander sitzen.

Bei Drainbackanlagen ist es notwendig, daß beim Befüllen des Absorbers Luft schnell und vollständig zum Drainbackgefäß verdrängt wird. Das wird erfindungsgemäß durch die Kombination von Vorlauf 16 mit parallelen Kanälen 15 und Rücklauf 18 mit einem einzelne Rohr 19 von vergrößertem Querschnitt geleistet, Im Gegensatz zu Kupferrohrregistern, wo es Schwierigkeiten bereitet, verschiedene Rohrquerschnitte zu integrieren und mit einem Absorberblech zu verbinden, kann beim Rollbondabsorber die Rohrgeometrie völlig frei gewählt werden, so daß sich darin ein Hauptrohr 19 von vergrößertem Querschnitt ohne Weiteres ausbilden läßt.

Aus Fig. 3, 3a und 3b geht hervor, daß im Bereich der Vor- und Rücklaufanschlüsse 16, 18 bzw. direkt daneben (Zone IIIa in Fig. 3) eine Fühlerausnehmung oder -hülse 35 vorhanden sein kann, die an einem schematisch angedeuteten, mit der Absorberplatte 14 wärmeleitend verbundenen Rohrstück 39 einen (nicht gezeichneten) Temperaturfühler aufnimmt. Diese Anordnung hat den großen Vorteil, daß die Temperaturmessung dank optimaler thermischer Anbindung fast unverzögert und sehr genau erfolgt. Das Rohrstück 39 ist neben einem Einschnitt 40 entlang einer Biegekante 41 nach unten um- oder abgebogen (Fig. 3a, 3b), so daß der Sensor selbst bei einer In-Dach-Montage im Bedarfsfall zugänglich ist. Ein Austausch kann notwendig werden, wenn Fühlerdefekte etwa infolge elektrischer Überspannungen auftreten.

Die beschriebene Anordnung erweist sich gerade bei einer komplexen Drainback-Rohrführung als konstruktiv und operativ günstig, zumal ein einfacher rückseitiger Rohranschluß möglich ist. Schräg verlaufende Kanäle erlauben die vollständige Entleerung des Systems, was in kühlerem Klima bei wasserbetriebenert Anlagen wegen Frostgefahr im Winter ganz wichtig ist.

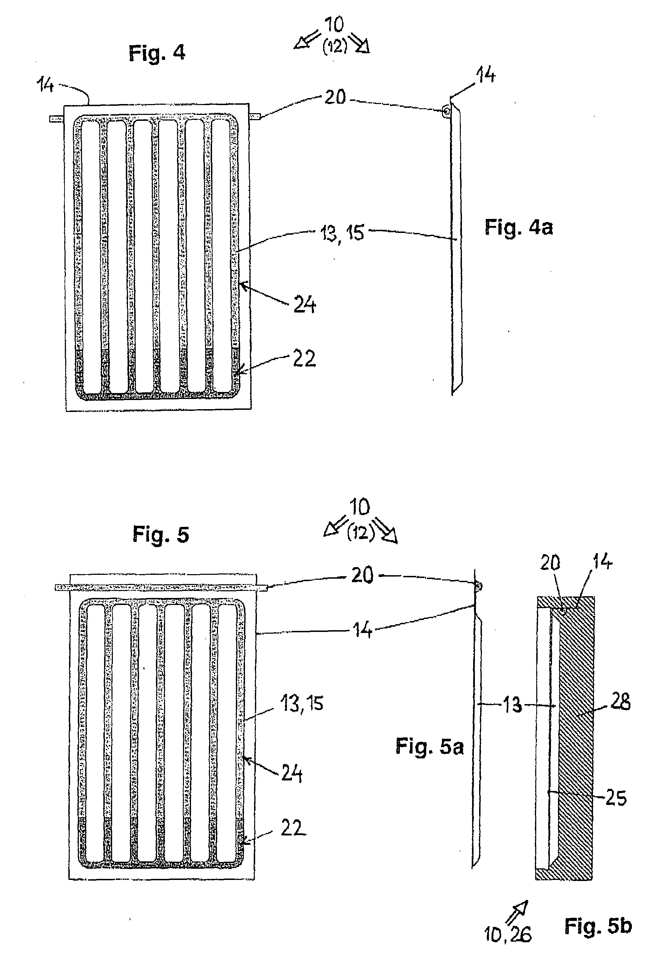

Um die Kollektoren vor Frost zu schützen, werden Solaranlagen vielfach mit Frostschutzflüssigkeit(en) betrieben, so daß im Speicher ein Wärmetauscher unentbehrlich ist; an bestehenden Anlagen kann das eine Nachrüstung erfordern. Bei Rollbondabsorbern gemäß Fig. 4 bis 5b wird Wasser in einem Rohr 20 erwärmt, das unmittelbar an der Absorberplatte 14 wärmeleitend befestigt ist und in einer eingehausten Dämmung 28 (Fig. 5b) gut isoliert untergebracht ist. Mithin fungiert der Rohrkanal 20 des Absorbers 13 als Kondensator, der von der verdampfenden Flüssigkeit im oberen Bereich 24 des Rollbondabsorbers 13 bereits bei mäßiger Temperatur Wärme aufnimmt (sog. Heatpipe-Prinzip) und diese über die Absorberplatte 14 an durch das Rohr 20 strömendes Wasser abgibt. Das Absorbermedium, z.B. Alkohol oder eine andere niedrigsiedende Flüssigkeit oder bei Unterdruckbetrieb auch Wasser, befindet sich im unteren Bereich 22 des Rollbondabsorbers 13 in flüssiger Phase. Im Rohr 20 kann Wasser zirkulieren. Dessen Zwangsumwälzung verhindert ein Einfrieren des Salarkreises im Winter ohne nennenswerte Wärmeverluste.

Man erkennt bei der Bauform von Fig. 5 und 5a, daß die Absorberplatte 14 des Rollbondabsorbers 13 bis zum oberen Ende durchgehend eben ist, wo der Rohrkanal 20 wärmeleitend eingefaßt sein kann. Es ist jedoch auch möglich und im Beispiel der Fig. 5b gezeichnet, daß der Rohrkanal 20 ins Innere verlagert ist, nämlich durch Abwinkelung der Absorberplatte 14 in ihrem oberen Teil. Damit gewinnt man zugleich eine geringere Bauhöhe. Die Darstellung von Fig. 5b deutet ein Gehäuse lediglich durch den Umriß der Dämmung 28 an, die es ausfüllt. Eine transparente Abdeckung 25 kann den Rollbondabsorber 13 überdecken.

Die gemeinsam z.B. als Bündel durch ein Dach geführten Rohrleitungen lassen sich durch eine zuverlässige Steckverbindung (31. Fig. 6) nach innen an die Anschlüsse 16, 18 führen.

Bei großen Speichervolumina können zwei oder mehr Rollbondabsorber 13 notwendig sein. Für deren Verbindung z.B. mit einem Doppelmantel eines Speichers 30 sind, wie in Fig. 6 schematisch veranschaulicht, Anschlußmuffen 31 vorgesehen, die bevorzugt mit den Vor- und Rücklaufanschlüssen 16, 18 fluchten und eine parallele, rasch herstellbare Steck-Rohrverbindung ermöglichen. Im Wärmetauschermantel ist hierbei ein Strömungsunterbrecher vorhanden, insbesondere in Form einer Trennwand 32, um zwecks Optimierung der Wärmeschichtung zu verhindern, daß sich aufsteigendes heißes Fluid des einen Absorbers 13 mit dem kühleren Rücklauffluid des anderen Absorbers vermischen könnte.

Die Erfindung ist nicht auf eine der vorbeschriebenen Ausführungsformen beschränkt, sondern in vielfältiger Weise abwandelbar, Ein wesentlicher Fortschritt beruht darauf, daß dank der Verwendung von Aluminium allein oder allenfalls zusammen mit Edelstahl-Komponenten ein Zusammentreffen sonstiger ungleicher Metalle nicht vorkommt. Dadurch sind die Herstellungs- und Montagekosten erheblich reduziert und es ist sichergestellt, daß ein korrosionssicheres, nämlich kupferfreies Warmwasser- bzw. Heizungssystem dauerhaft zur Verfügung steht. Ein bei Heatpipe-Kollektoren separat oben aufgesetzter Rohrkanal ist Bestandteil der Zirkulationsanordnung des Strömungsmediums, so daß kein Speicher-Wärmetauscher erforderlich ist, für den man herkömmlich Frostschutzmittel und Sicherheits-Armaturen benötigt. Solche Kollektoren können auch direkt mit dem Heizungskreislauf verbunden werden, so daß die Solarwärme unmittelbar in des Heizsystem oder in einen Pufferspeicher geleitet wird. Weil ein vorhandener Speicher mitgenutzt werden kann, entfällt das sonst notwendige komplette Solarkreissystem samt Sicherheitsarmaturen.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

| | | | |
|---|---|---|---|
| 10 | Sonnenkollektorsystem | 28 | Dämmung |
| 12 | Kollektor | 30 | Speicher |
| 13 | Rollbondabsorber | 31 | Anschlußmuffen |
| 14 | Absorberplatte | 32 | Trennwand |
| 15 | Kanäle | 34 | Ventil |
| 16 | Vorlauf(rohranschluß) | 35 | Fühlerhülse |
| 18 | Rücklauf(rohranschluß) | 36 | Thermostat |
| 19 | [integriertes] Hauptrohr | 38 | Sensorleitung |
| 20 | Rohrkanal / Solarkreislaufrohr | 39 | Rohrstück |
| 22 | Fluid / Flüssigphase | 40 | Einschnitt |
| 24 | Unterdruckbereich | 41 | Biegekante |
| 25 | (Glas-)Abdeckung | | |

## Patentansprüche

1. Solarkollektorsystem (10) mit einem Kollektor (12), der einen Rollbondabsorber (13) mit einer Absorberplatte (14) aufweist, in der Kanäle (15) für die Zirkulation eines Wärmetauscher-Strömungsmedlums ausgebildet sind, sowie mit Vor- und Rücklaufanschlüssen (16; 18) am Kollektor (12) und einem zu ihm führenden Rücklauf, **dadurch gekennzeichnet, daß** in den Rollbondabsorber (13) ein Hauptrohr (19) eingearbeitet ist, dessen Querschnitt größer als derjenige der übrigen Kollektor-Rohrleitungen bzw. Kanäle (15) ist.

2. System nach Anspruch 1, **dadurch gekennzeichnet, daß** das integrierte Hauptrohr (19) an der Absorberplatte (14) wärmeleitend angebracht, z.B. mit ihm stoffschlüssig verbunden oder mit ihm einstückig ist.

3. System nach Anspruch 1 oder 2, **dadurch gekennzeichnet, daß** das integrierte Hauptrohr (19) als Rücklaufrohr fungiert.

4. System nach einem der Ansprüche 1 bis 3, **dadurch gekennzeichnet, daß** die Vor- und Rücklaufanschlüsse (16; 18) am Rollbondabsorber (13) auf gleicher Höhe und/oder nebeneinander angeordnet sind.

5. System nach Anspruch 4. **dadurch gekennzeichnet, daß** die Vor- und Rücklaufanschlüsse (16; 18) am Rollbondabsorber (12) beide oben angeordnet sind (Fig. 1 und 2).

6. System nach einem der Ansprüche 1 bis 5, **dadurch gekennzeichnet, daß** auf den Rollbondabsorber (13) ein separater Rohrkanal (20) als Solarkreislaufrohr aufgesetzt ist (Heatpipe, Fig. 4 bis 5b).

7. System nach Anspruch 6, **dadurch gekennzeichnet, daß** der Rohrkanal (20) an dem Rollbondabsorber (13) angebracht oder mit ihm einstückig ist.

8. System nach einem der Ansprüche 1 bis 7, **dadurch gekennzeichnet, daß** der Rollbondabsorber (13) eine Anzahl aufwärts gerichteter, insbesondere paralleler Kanäle (15) im Hoch- oder Querformat aufweist (Fig. 1 bzw. 2).

9. System nach einem der Ansprüche 1 bis 8, **dadurch gekennzeichnet, daß** der Rollbondabsorber (13) mit einem Speicher unter Schwerkraftzirkulation strömungsverbunden bzw. -verbindbar ist (Fig. 6).

10. Solarkollektorsystem (10) mit einem Kollektor (12), der einen Rollbondabsorber (13) mit einer Absorberplatte (14) aufweist, in der Kanäle (15) für die Zirkulation eines Wärmetauscher-Strömungsmediums ausgebildet sind, **dadurch gekennzeichnet, daß** der Rollbondabsorber (13) in sich geschlossene Absorberkanäle (15), einen separaten Rohrkanal (20) und ein Hauptrohr (19) aufweist, dessen Querschnitt größer als derjenige der übrigen Kollektor-Rohrleitungen bzw. Kanäle (15) ist (Fig. 3).

11. System nach Anspruch 10, **dadurch gekennzeichnet, daß** der Rollbondabsorber (13) eine Füllung (22) aus niedrigsiedender Flüssigkeit enthält oder daß seine Füllung (22) durch Unterdruck eine Absenkung des Siedepunkts erfährt.

12. System nach Anspruch 10 oder 11, **dadurch gekennzeichnet, daß** die Vor- und Rücklaufanschlüsse (16; 18) am Absorber (13) beide direkt nebeneinander angeordnet sind (Fig. 3 und 3a).

13. System nach einem der Ansprüche 10 bis 12, **dadurch gekennzeichnet, daß** zu den Anschlüssen (16: 18) führende, mit einer Rohr-Steckverbindung (31) versehene Rohrleitungen gemeinsam, z.B. gebündelt verlegbar sind.

14. System nach einem der Ansprüche 10 bis 13, **dadurch gekennzeichnet, daß** in einem Anschlußbereich (IIIa) der Absorberplatte (14) wenigstens ein Rohrstück (39) und neben diesem wenigstens ein Einschnitt (40) vorhanden ist (Fig. 3a).

15. System nach einem der Ansprüche 10 bis 14, **dadurch gekennzeichnet, daß** ein Kanalstück, insbesondere ein Rohrstück (39), an oder in einem abgewinkelten Bereich (IIIa, Fig. 3 und 3a) der Absorberplatte (14) angebracht ist.

16. System nach Anspruch 15, **dadurch gekennzeichnet, daß** das Rohrstück (39) am oder im Rollbondabsorber (13) in einer Wärmeisolierung angeordnet ist.

17. System nach Anspruch 15 oder 16, **dadurch gekennzeichnet, daß** das Rohrstück (39) schräg zur Absorberplatte (14) angeordnet ist.

18. System nach einem der Ansprüche 5 bis 17, **dadurch gekennzeichnet, daß** das Rohrstück (39) wärmeleitend an oder unter der Absorberplatte (14) angebracht ist.

19. System nach einem der Ansprüche 1 bis 18, **dadurch gekennzeichnet, daß** ein Temperaturfühler an oder unmittelbar neben der Vorlaufleitung (16) wärmeleitend angebracht bzw. anbringbar ist.

20. System nach einem der Ansprüche 15 bis 19, **dadurch gekennzeichnet, daß** in einem Anschlußbereich (IIIa, Fig. 3 und 3a) der Absorberplatte (14) eine Öffnung oder Hülse (35) zum Einstecken eines Fühlers vorgesehen ist.

21. System nach Anspruch 19 oder 20, **dadurch gekennzeichnet, daß** die Fühlerhülse (35) neben einem am Vorlauf (16) ab- oder umgebogenen Rohrstück (39) angeordnet ist (Fig. 3).

22. System nach einem der Ansprüche 1 bis 21, **dadurch gekennzeichnet, daß** er eine Zirkulationsleitung zur Verbindung mit einem Warmwasserspeicher, z.B. einem Elektroboiler, aufweist.

23. System nach einem der Ansprüche 1 bis 22, **dadurch gekennzeichnet, daß** der Rollbondabsorber (13) sowohl Sammler- als auch Verteilerkanäle von wählbarer Geometrie enthält.
